# EUROPÄISCHE PATENTSCHRIFT

(11) **EP 2 265 423 B1**
(45) Veröffentlichungstag und Bekanntmachung des Hinweises auf die Patenterteilung: **09.01.2013**
(21) Anmeldenummer: 09730628.6
(22) Anmeldetag: 03.04.2009
(51) Int. Cl.: B23C 3/12

(54) **FRÄSAGGREGAT MIT PENDELNDER WERKZEUGAUFNAHMESPINDEL**
MILLING UNIT HAVING AN OSCILLATING TOOL-MOUNTING SPINDLE
GROUPE DE FRAISAGE AVEC BROCHE D ATTACHEMENT D OUTIL PENDULAIRE

(30) Priorität: 09.04.2008 DE 102008018079
(43) Veröffentlichungstag der Anmeldung: 29.12.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/000430
(87) Internationale Veröffentlichungsnummer: WO 2009/124527

(56) Entgegenhaltungen:
- EP-A- 1 992 462
- DE-A1- 10 205 033
- DE-U1- 20 308 037
- US-A- 4 991 637

## Beschreibung

Die Erfindung betrifft ein Fräsaggregat gemäβ dem Oberbegriff des Anspruchs 1.

Eim solches Aggregat ist aus US4991637 A1 bekannt.

Die Benz-Werkzeugsysteme GmbH aus 77716 Haslach baut seit 1994 eine derartiges Fräsaggregat, bei dem die Werkzeugaufnahmespindel jeweils an zwei hintereinander angeordneten und senkrecht zueinander verfahrbaren Aggregateschlitten gelagert ist. Der einzelne Aggregateschlitten hat jeweils einen quer zur Mittellinie der Werkzeugaufnahmespindel orientierten Freiheitsgrad. Die gegenüber dem Aggregategehäuse im Millimeterbereich querschwingende Werkzeugaufnahmespindel wird über eine Schmidt-Kupplung angetrieben. Diese Kupplung vibriert bei kleinen Schlittenauslenkungen.

Aus der US 4,991,637 ist ein Fräsaggregat bekannt, bei dem das Fräswerkzeug und die Tastrolle an einer Parallelogrammführung aufgehängt sind. Da die Pendelstreben der Parallelogrammführung senkrecht zu den längeren Bearbeitungsflächen des Werkstücks orientiert sind, ist schon bei einem kleinem Korrekturhub des parallelogrammführungsbedingte Fräserversatzes parallel zur Verfahrrichtung sehr groß.

Der vorliegenden Erfindung liegt die Problemstellung zugrunde, ein Fräsaggregat zu entwickeln, das bei einfacher Handhabung einen vibrationsarmen Lauf gewährleistet.

Diese Problemstellung wird mit den Merkmalen des Anspruches 1 gelöst. Dabei ist die Werkzeugaufnahmespindel mit einer im Gehäusekörper gelagerten Aggregatespindel durch ein Zahnradgetriebe verbunden. Die Mittellinie der Werkzeugaufnahmespindel ist quer zur Mittellinie der Aggregatespindel ausgerichtet. Die Werkzeugaufnahmespindel ist an zwei mechanisch hintereinander gekoppelten Pendelträgern gelagert. Der erste Pendelträger ist am Gehäusekörper schwenkbar gelagert, während der zweite, die Werkzeugaufnahmespindel tragende Pendelträger, am ersten Pendelträger gelagert ist.

Mit der Erfindung wird ein Fräsaggregat zur Verfügung gestellt, dessen rotierende Werkzeugaufnahmespindel an zwei hintereinander angeordneten Pendelträgern gelagert ist. Jeder Pendelträger pendelt dabei gegenüber dem ihn tragenden Aggregateteil um wenige Winkelgrade hin und her. Die Werkzeugaufnahmespindel ist somit gegenüber dem Gehäuse des Fräsaggregats im Bereich von einigen Millimetern querbeweglich.

Weitere Einzelheiten der Erfindung ergeben sich aus den Unteransprüchen. Es folgen Beschreibungen schematisch dargestellter Ausführungsbeispiele.
- Figur 1:: Fräsaggregat mit pendelnder Werkzeugaufnahmespindel;
- Figur 2:: Frontansicht zu Figur 1;
- Figur 3:: Schnitt B-B zu Figur 2;
- Figur 4:: Ausschnitt, vergrößert, von Figur 3, zusätzlich mit einer Nulllagenkontrolle;
- Figur 5:: Funktionsschema zu Figur 2;
- Figur 6:: Alternatives Funktionsschema;
- Figur 7:: Gehäusekörper zu Figur 1;
- Figur 8:: Erster Pendelträger zu Figur 1;
- Figur 9:: Zweiter Pendelträger zu Figur 1.

In der Figurenbeschreibung werden baugleiche Teile pro Welle, pro Achse und pro Pendelträger mit dem gleichen Bezugszeichen versehen.

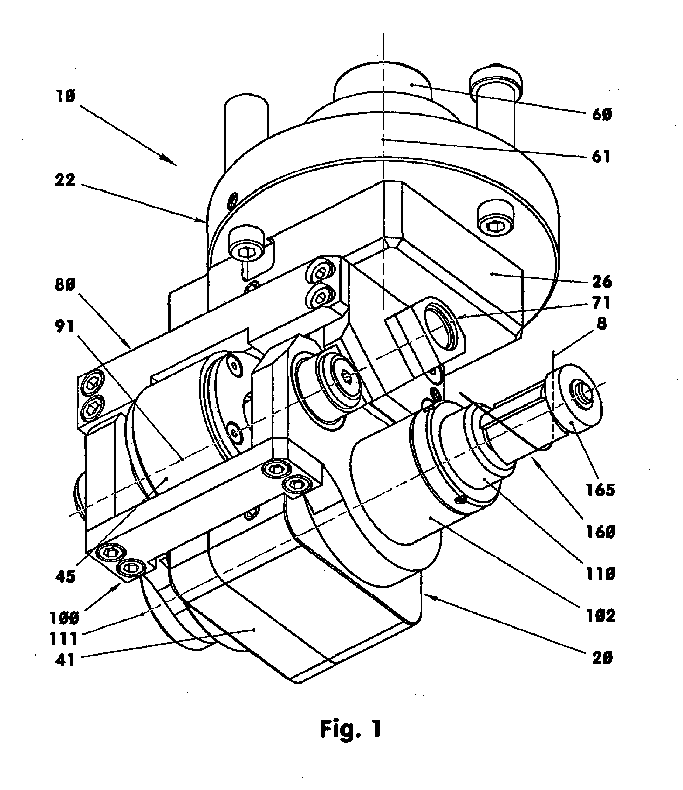

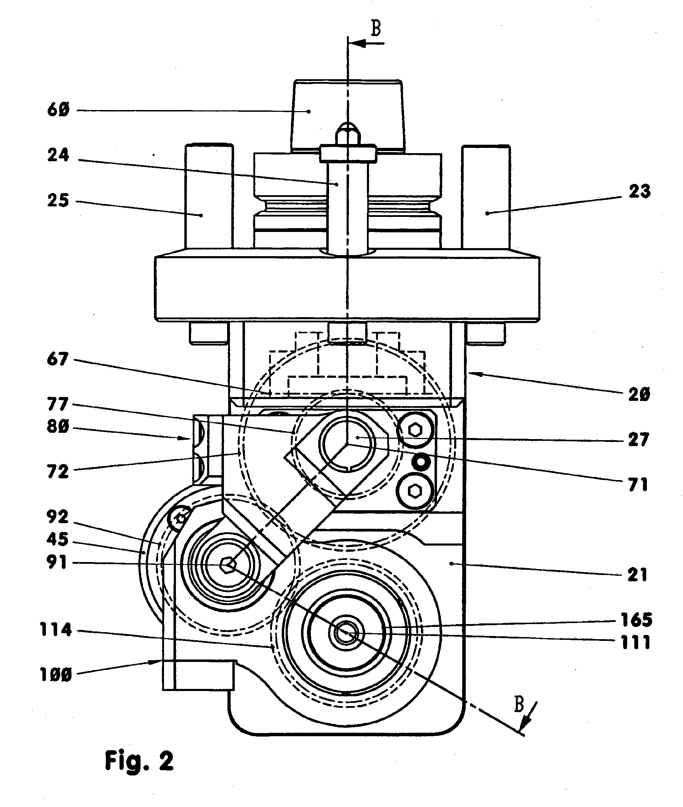

Die Figur 1 zeigt ein Fräsaggregat (10) und einen in einer Werkzeugaufnahmespindel (110) aufgenommenen Bündigfräser (160). Die Werkzeugaufnahmespindel (110) ist dabei an zwei räumlich hintereinander angeordneten Pendelträgern (80, 100) gelagert, wobei der erste Pendelträger (80) an einem Gehäusekörper (20) angelenkt ist. Der Gehäusekörper (20), aus dem oben eine Aggregatespindel (60) herausragt, umfasst beispielsweise einen Grundkörper (21), einen Grundkörperdeckel (41) und eine Gehäusehaube (45). Im Gehäusekörper (20) ist ein zweistufiger Getriebezug untergebracht. Alle Zahnräder (72, 77, 92, 114) des Getriebezuges, vgl. Figur 2, sind mit Ausnahme eines Planrades (67) z.B. geradverzahnte Stirnräder. Alle zwischen dem Planrad (67) und einem auf der Werkzeugaufnahmespindel (110) sitzenden Zahnrad (114) angeordneten Stirnräder (72, 77, 92) rotieren auf den Pendelachsen (71, 91) der Pendelträger (80, 100).

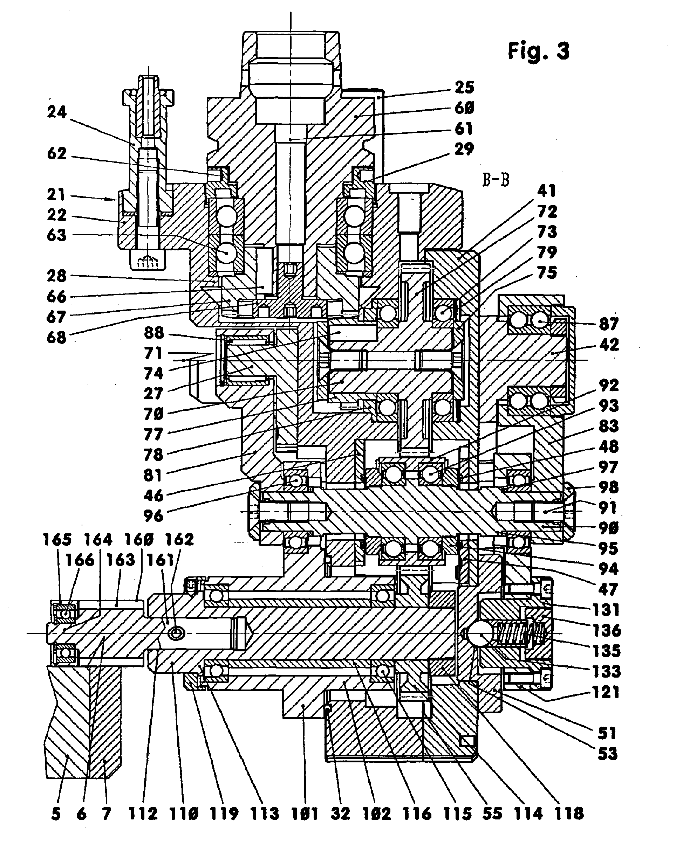

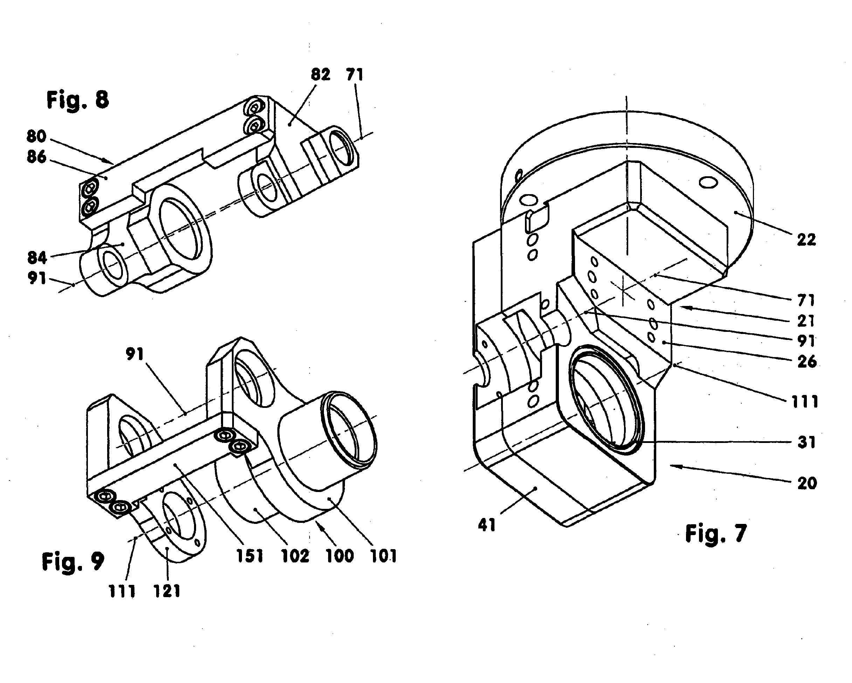

In Figur 7 ist vom Gehäusekörper (20) der Grundkörper (21) und der Grundkörperdeckel (41) dargestellt. Der Grundkörper (21) besteht aus einem scheibenförmigen Abschnitt (22) und einem zumindest annähernd quaderförmigen Abschnitt (26). Im scheibenförmigen Abschnitt (22) ist zentral die Aggregatespindel (60) gelagert, vgl. Figur 3.

Auf der außen in einem Hohlschaftkegel endenden Aggregatespindel (60) sind zwischen einem Wellenbund (62) und einem Planrad (67) zwei in O-Anordnung montierte Schulterlager (63) über deren Innenringe fixiert. Beispielsweise ist zu Justierzwecken zwischen den Schulterlagern (63) und dem Planrad (67) eine Distanzscheibe angeordnet. Das Planrad (67) sitzt radial zentriert auf einem Absatz der Aggregatespindel (60). Es ist mit der Aggregatespindel (60) über eine breitköpfige Zentralschraube (68) verschraubt. Zur Drehmomentübertragung ist in der zwischen dem Planrad (67) und der Aggregatespindel (60) gelegenen Montagefuge eine Passfeder (66) zur Drehmomentübertragung angeordnet.

Die Aggregatespindel (60) sitzt mit den Außenringen der Schulterlager (63) zentral im scheibenförmigen Abschnitt (22) des Grundkörpers (21) zwischen einem Gehäusebund (28) und einer Gehäusemutter (29). An dem scheibenförmigen Abschnitt (22) sind ein der Aggregateverdrehsicherung dienender Indexbolzen (23), ein Druckluftzuführstift (24) und ein Abstützbolzen (25) festgeschraubt, vgl. Figur 2. Deren Mittellinien sind parallel zur Mittellinie (61) der Aggregatespindel (60) orientiert. Sie liegen zudem - um jeweils 120 Winkelgrade geteilt - auf einem Zylinder, dessen Mittellinie die Mittellinie (61) ist.

Das Planrad (67) kämmt mit dem Antriebsrad (77) einer Nebenwelle (70), auf der ein Abtriebsrad (72) angeformt ist. Das Abtriebsrad (72) hat z.B. den doppelten Durchmesser des Antriebsrades (77). Die Nebenwelle (70) ist im quaderförmigen Abschnitt (26) des Gehäusekörpers (20) - zwischen dem Grundkörper (21) und dem Grundkörperdeckel (41) - in zwei Rillenkugellagern (73) gelagert, vgl. Figur 7. Der ebenfalls quaderförmige Grundkörperdeckel (41) liegt z.B. in einer planen Montagefuge (55) am Grundkörper (21) an.

Das auf der Nebenwelle (70) mittels einer Passfeder (74) drehfest gelagerte Antriebsrad (77) wird axial über eine verschraubte Scheibe (75) zusammen mit dem ersten Rillenkugellager (73) gegen den Nabenbund des Abtriebsrades (72) fixiert. Auch das zweite Rillenkugellager (73) wird mittels einer verschraubten Scheibe (75) gegen den anderen Nabenbund des Abtriebsrades (72) gepresst. Der Außenring des ersten Rillenkugellagers (73) liegt über einen Labyrinthdichtring (78) am Grundkörper (21) axial an. Zwischen dem Grundkörperdeckel (41) und dem Außenring des zweiten Rillenkugellagers (73) ist zum Spielausgleich eine Wellfeder (79) angeordnet.

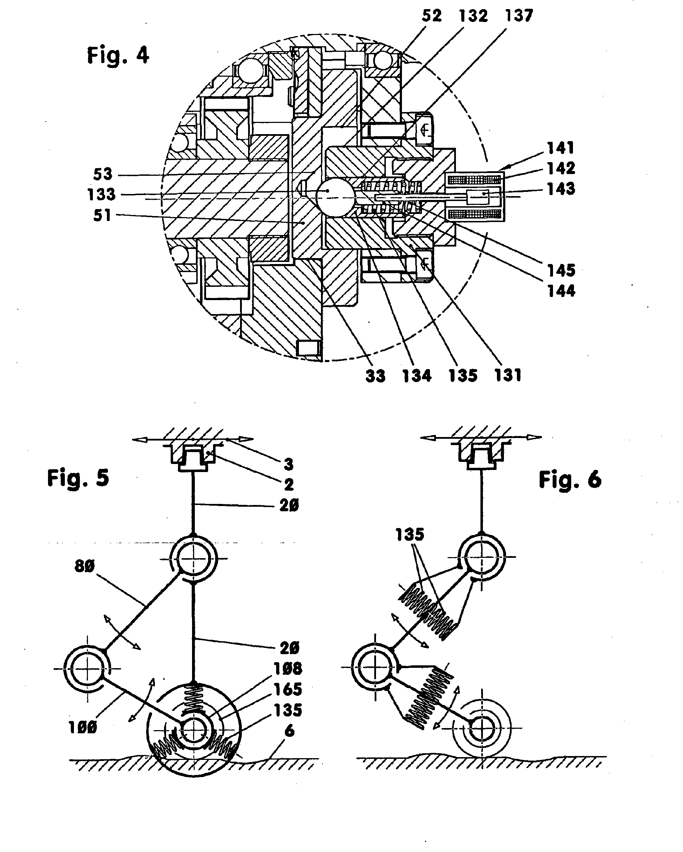

Die Mittellinie (71) der Nebenwelle (70) ist zugleich auch die Pendelachse des ersten Pendelträgers (80). Zur Lagerung des Pendelträgers (80) ist am Grundkörper (21) ein erster Drehzapfen (27) und am Grundkörperdeckel (41) ein mit diesem fluchtender zweiter Drehzapfen (42) starr befestigt. Beide Drehzapfen (27, 42) haben jeweils einen Montageflansch. Der Pendelträger (80) pendelt somit um einige Winkelgrade um eine vom Gehäusekörper (21) festgelegte Pendelachse (71), vgl. auch Figur 5.

Der erste Pendelträger (80) besteht aus einem vorderen (81) und einem hinteren Pendelarm (83), wobei der vordere Pendelarm (81) auf der dem Werkzeug (160) zugewandten Pendelträgerseite liegt, vgl. Figuren 8, 1 und 2. Jeder Pendelarm (81, 83) hat an seinen beiden freien Enden eine Lagerbohrung, wobei die Mittellinien der nach Figur 3 oben liegenden Lagerbohrungen auf der ersten Pendelachse (71) liegen, während die Mittellinien der unteren Lagerbohrungen auf der zweiten Pendelachse (91) liegen. Der vordere Pendelarm (81) sitzt über ein Nadellager (88) auf dem ersten Drehzapfen (27). Der hintere Pendelarm (83) schwenkt auf einem - als Festlager ausgebildeten - doppelreihigen Kugellager (87), das auf dem zweiten Lagerzapfen (42) mittels einer Wellenmutter und im Pendelarm (83) über einen Bund und einen Schraubdeckel fixiert ist.

Die Mittellinien (71) und (91) haben hier einen Abstand von 56,1 Millimetern.

Der vordere Pendelarm (81) ist in erster Näherung ein einfach gekröpfter Stab mit großteils rechteckigen Querschnitten, vgl. Figur 8. Der hintere Pendelarm (83) besteht aus über einen Steg verbundenen Lageraugen. Am Stab und am Steg sind seitlich jeweils Rippen (82, 84) angeformt, die zumindest in der Frontansicht einen z.B. dreieckigen Querschnitt haben. Die beiden Rippen (82, 84) sind zum einen über eine zu den Pendelachsen (71, 91) parallele Quertraverse (86) und zum anderen über eine Pendelwelle (90) formsteif verbunden.

Die Pendelwelle (90) ist eine mehrfach gestufte, körperliche Achse, die neben der Verbindung der beiden Pendelarme (81, 83) ein Zwischenrad (92) und den zweiten Pendelträger (100) lagert. Dieser zweite Pendelträger (100) pendelt einige Winkelgrade um eine vom ersten Pendelträger (80) festgelegte Pendelachse (91), vgl. auch Figur 5.

Im mittleren Bereich der Pendelwelle (90) sitzt rechts und links neben einem Bund je ein Kugellager (93), das sich dort jeweils über seinen Innenring abstützt. Die Innenringe werden mittels zweier Wellenmuttern (94) gegen den Bund gepresst. Die Außenringe der Kugellager (93) tragen das mit dem Abtriebsrad (72) kämmende Zwischenrad (92). Es ist über einen Bund axial zwischen den Außenringen geführt.

In den beiden äußeren Bereichen hat die Pendelwelle (90) je einen Wellenbund (95), an dem über einen Zwischenring (97) ein Kugellager (96) mittels seines Innenringes anliegt. An den Innenringen der beiden Kugellager (96) liegen außen die beiden Pendelarme (81, 83) des ersten Pendelträgers (80) an. Die Pendelarme (81, 83) werden über zentral sitzende Scheiben (98) zusammen mit den Innenringen der Kugellager (96) und den Zwischenringen (97) gegen den jeweiligen Wellenbund (95) gepresst. Erst nach dieser Montage wird die Quertraverse (86) an den Rippen (82, 84) der Pendelarme (81, 83) fixiert. Auf jedem Außenring der Kugellager (96) lagert schwimmend je ein Pendelarm (101, 121) des zweiten Pendelträgers (100).

Zwischen dem Pendelarm (101) und der rechten Wellenmutter (94) befindet sich der Grundkörper (21) und eine - daran befestigte - die Wellenmutter (94) über eine ringförmige Dichtung (48) kontaktierende Gehäusescheibe (46). Ebenso ist zwischen dem Pendelarm (121) und der linken Wellenmutter (94) der Grundkörperdeckel (41) und eine - daran befestigte - diese Wellenmutter (94) über eine weitere ringförmige Dichtung (48) berührende Gehäusescheibe (47) angeordnet. Die Gehäusescheiben (46, 47) tragen eine z.B. zumindest annähernd halbzylinderförmige Gehäusehaube (45), vgl. Figur 1 und 2.

Die Pendelwelle (90) kontaktiert die Gehäuseteile (21, 41, 45) nicht in radialer Richtung. Axial zur Pendelwelle (90) schleifen die in den Gehäusescheiben (46, 47) positionierten Dichtungen (48) an den planen, feinbearbeiteten freien Stirnflächen der Wellenmuttern (94), sofern der erste Pendelträger (80) sich gegenüber dem Gehäusekörper (20) betriebsbedingt verlagert.

Der vordere Pendelarm (101), vgl. Figur 9, trägt einen Rohrkörper (102), in dem die Werkzeugaufnahmespindel (110) schwimmend gelagert ist. Letztere hat eine Mittellinie (111), die von der Mittellinie (91) z.B. einen Abstand von 46,5 Millimetern hat und zu dieser parallel verläuft. Der Abstand gegenüber der Mittellinie (71) beträgt in der Nulllage beispielsweise 65 Millimeter.

Die Werkzeugaufnahmespindel (110) ist eine sich beispielsweise von vorn nach hinten verjüngende Welle. Im vorderen Bereich hat sie eine zentrale Bohrung (112), in die das Werkzeug (160) eingesteckt und mittels eines radial auf eine Auflagefläche (162) wirkenden Gewindestifts fixiert wird. Alternativ trägt die Werkzeugaufnahmespindel (110) anstelle der zentralen Bohrung (112) ein Spannfutter.

Das in den Figuren 1 und 3 gezeigte Werkzeug (160) ist ein sog. Bündigfräser. Er setzt sich im Wesentlichen aus einem Walzenfräser (163) und einer Tastrolle (165) zusammen. Der Walzenfräser (163), sein Schaft (161) und der Lagerbolzen (164) für die Tastrolle (165) bestehen aus einem Teil. Die Tastrolle (165) ist auf dem Lagerbolzen (164) mittels eines Kugellagers (166) gelagert und axial über Sicherungsringe gehalten. Sie hat im Ausführungsbeispiel einen Außendurchmesser von 25 mm. Anstelle des Bündigfräsers kann auch ein Bündigfasefräser verwendet werden.

Auf der Werkzeugaufnahmespindel (110) sitzen innerhalb des Rohrkörpers (102) zwei über eine Distanzhülse (116) beabstandete, in O-Anordnung ausgerichtete, Schulterlager (115), ein Spindelrad (114) und eine Wellenmutter (118), vgl. Figur 3. Letztere drückt die Schulterlager (115), die Distanzhülse (116) und das mit dem Zwischenrad (92) kämmende Spindelrad (114) gegen einen am linken Wellenendbereich angeordneten Wellenbund (113). Vor dem linken Schulterlager (115) sitzt vor dem Rohrkörper (102) ein Labyrinthdichtring (119).

Der vordere Pendelarm (101) kontaktiert den Grundkörper (21) über einen Dichtring (32), der in eine Gehäusenut (31) des Grundkörpers (21) eingelegt ist, vgl. Figur 7. Der Rohrkörper (102) hat keinen radialen Kontakt zum Grundkörper (21).

Der hintere Pendelarm (121), vgl. auch Figur 9, ist eine Platte mit zwei großen Bohrungen. Die obere Bohrung, eine Stufenbohrung, ist auf dem Außenring des Kugellagers (96) gelagert. Die andere, untere Bohrung lagert zentrierend einen Rückstellflansch (131). Dessen Mittellinie fluchtet mit der Mittellinie (111) der Werkzeugaufnahmespindel (110). Beide Pendelarme (101, 121) des zweiten Pendelträgers (100) sind über eine vierkantstabförmige Quertraverse (151) formsteif miteinander verbunden.

Im Grundkörperdeckel (41) sitzt zwischen dem hinteren Pendelarm (121) und der hinteren Stirnfläche der Werkzeugaufnahmespindel (110) in einer Bohrung (33) ein Zentrierflansch (51). Letzterer hat auf seiner der Werkzeugaufnahmespindel (110) abgewandten Seite eine Zylindersenkung, in deren Grund sich eine feinbearbeitete Kegelsenkung (53) befindet, deren Kegelwinkel z.B. 90 Winkelgrade beträgt.

Nach Figur 3 und 4 sitzt in der Kegelsenkung (53) eine Rückstellkugel (133), die über die Bohrung (137) des pendelarmseitigen Rückstellflansches (131) geführt wird. In der Bohrung (137) sitzt dazu beispielsweise eine Federhülse (134), die sich mittels einer Rückstellfeder (135) an einer im Rückstellflansch (131) ggf. verstellbar angeordneten Deckelschraube (136) abstützt. Die federbelastete Rückstellkugel (133) positioniert die - von den beiden Pendelträgern (80, 100) geführte - Werkzeugaufnahmespindel (110) gegenüber dem Gehäusekörper (20) in einer Nulllage, trotz der Gewichtskräfte der Pendelträger (80, 100), der Werkzeugaufnahmespindel (110) und des Werkzeugs (160). Die Figuren 1 bis 3 stellen die Werkzeugaufnahmespindel (110) in der Nulllage dar.

Die Mittellinie (111) der Werkzeugaufnahmespindel (110) kann bei einem Betrieb des Fräsaggregats (10) jeden beliebigen Punkt einer Kreisfläche schneiden, die auf einer zur Mittellinie (111) normalen Ebene liegt und deren Mittelpunkt die Nulllage darstellt. Im Ausführungsbeispiel hat die Kreisfläche einen Durchmesser von fünf Millimetern.

Die Auslenkung der Werkzeugaufnahmespindel (110) wird mechanisch begrenzt durch den Durchmesser der radialen Innenwandung (52) der Zylindersenkung des Zentrierflansches (51) und durch den Durchmesser der zylindrischen Außenwandung (132) des in die Zylindersenkung hineinragenden Rückstellflansches (131).

In Figur 4 wird ein im Zentrierflansch (51) maximal ausgelenkter Rückstellflansch (131) gezeigt. Die Rückstellkugel (133) kontaktiert die Kegelsenkung (53) in deren Randbereich. Gegenüber der Figur 3 ist hier in der Deckelschraube (136) ein induktives Wegmesssystem (141) integriert. Es besteht aus einer an der Deckelschraube (136) z.B. angeklebten Wegmessspule (142) und einem darin bewegbaren Eisenkern (143). Der Eisenkern (143) ist an seinem Schaft in einer Bohrung der Deckelschraube (136) geführt. Auf dem Schaft ist ein Tastelement (144) aufgepresst, das, belastet durch die Schraubenfeder (145), an der Rückstellkugel (133) anliegt. Der durch die Verlagerung der Rückstellkugel (133) bewirkte lineare Versatz des Eisenkerns (143) wird in einer Ansteuerschaltung und in einer nachgeschalteten Auswerteelektronik in eine konkrete Weglänge umgewandelt. Das Wegmesssystem (141) kann ggf. batteriegepuffert seine Messdaten an die Werkzeugmaschine senden. Somit besteht die Möglichkeit, den Normalenabstand des Fräsaggregats (10) gegenüber einem Werkstück (5 - 7) z.B. im Einzelfall nachzustellen.

Anstelle der die Rückstellkugel (133) belastenden mechanischen Schraubendruckfeder (135) kann auch ein pneumatisches, hydropneumatisches oder ein magnetisches Federelement oder Federsystem verwendet werden.

Die Figur 5 zeigt in einer vereinfachten Schemadarstellung eine weitere Rückstellvariante, jedoch ohne stabile Nulllage. Am Gehäusekörper (20) wirken z.B. drei oder mehr sternförmig angeordnete Federelemente (135) auf eine um die Mittellinie (111) der Werkzeugaufnahmespindel schwenkbare Zwischenhülse (108). Die Lage der Zwischenhülse (108) bestimmt somit den zwischen dem Gehäusekörper (20) und ersten Pendelträger (80) gelegenen Winkel sowie den vom ersten (80) und zweiten Pendelträger (100) eingeschlossenen Winkel.

In Figur 6 werden die Federelemente (135) so angeordnet, dass sich der erste Pendelträger (80) federnd am Gehäusekörper (20) und der zweite Pendelträger (100) ebenfalls federnd am ersten Pendelträger (80) abstützt. Bei dieser Hintereinanderschaltung von Federsystemen gibt es ebenfalls keine feste Nulllage.

Die in den Figuren 5 und 6 gezeigten Federelemente (135) können ggf. durch spezielle Vorrichtungen einzeln gespannt bzw. eingestellt werden. Auch sind anstelle der gezeigten Schraubendruckfedern (135), Zug-, Biege- und Torsionsfedern denkbar. Ferner können die Federelemente (135) auch hier durch pneumatische, hydropneumatische oder magnetische Federelemente oder Federsysteme ersetzt werden.

Zum Abfräsen eines überstehenden Anleimers (7), Einleimers oder Umleimers rollt die Tastrolle (165) auf der den Anleimer (7) tragenden Werkstückplatte (5) entlang, während der Walzenfräser (163) das in Figur 3 nach oben überstehende Material des Anleimers (7) zerspanend abträgt. Statt des Walzenfräsers (163) kann auch eine Schmirgelrolle oder dergleichen benutzt werden.

Während des Fräsvorganges wird das Fräsaggregat (10) von Maschinenschlitten (2) der Werkzeugmaschine CNC-gesteuert entlang der theoretischen Lage der Werkstückplatte (5) geführt. Dabei hat die Mittellinie (111) der Werkzeugäufnahmespindel (110) von der Werkstückplatte (5) einen Normalenabstand, der im Rahmen der Maschinen- und Aggregatetoleranz z.B. genau einer Differenz aus dem Radius der Tastrolle (165) und einem Vorhalteweg von z.B. einem Millimeter entspricht. Ist nun die Istlage der werkstückseitigen Oberflächenkontur (6) zur theoretischen Solllage deckungsgleich, befindet sich die Werkzeugaufnahmespindel (110) um den Vorhalteweg von der Nulllage. Damit wird das Werkzeug (160) durch die Rückstellfeder (135) gegen das Werkstück (5 - 7) gepresst.

### Bezugszeichenliste:

- 2: Maschinenschlitten, Werkzeugmaschinenschlitten
- 3: Verfahrrichtung
- 5: Werkstückplatte
- 6: Oberflächenkontur
- 7: Anleimer, Einleimer, Umleimer
- 8: Fräsbahn

- 10: Fräsaggregat

- 20: Gehäusekörper
- 21: Grundkörper
- 22: Abschnitt, scheibenförmig
- 23: Indexbolzen
- 24: Druckluftzuführstift
- 25: Abstützbolzen
- 26: Abschnitt, quaderförmig
- 27: erster Drehzapfen
- 28: Gehäusebund
- 29: Gehäusemutter

- 31: Gehäusenut
- 32: Dichtring
- 33: Bohrung für (Zentrierflansch)

- 41: Grundkörperdeckel
- 42: zweiter Drehzapfen

- 45: Gehäusehaube
- 46, 47: Gehäusescheiben
- 48: Dichtung; ringförmig

- 51: Zentrierflansch
- 52: Innenwandung der Zylindersenkung
- 53: Ausnehmung, Kegelsenkung

- 55: Montagefuge, plan

- 60: Aggregatespindel
- 61: Mittellinie, C-Achse
- 62: Wellenbund
- 63: Schulterlager
- 66: Passfeder
- 67: Planrad, Kronenrad
- 68: Zentralschraube

- 70: Nebenwelle
- 71: erste Pendelachse, Mittellinie
- 72: Abtriebsrad, Stirnrad
- 73: Rillenkugellager
- 74: Passfeder
- 75: Scheiben
- 77: Antriebsrad, Stirnrad
- 78: Labyrinthdichtring
- 79: Wellfeder

- 80: Pendelträger, erster
- 81: Pendelarm, vorn
- 82: Rippe
- 83: Pendelarm, hinten
- 84: Rippe
- 86: Quertraverse
- 87: Kugellager, doppelreihig
- 88: Nadellager

- 90: Pendelwelle
- 91: zweite Pendelachse, Mittellinie
- 92: Zwischenrad, Stirnrad
- 93: Kugellager
- 94: Wellenmuttern

- 95: Wellenbund, außen
- 96: Kugellager (für 2. Pendelarme)
- 97: Zwischenringe
- 98: Scheiben (an Stirnseite)

- 100: Pendelträger, zweiter
- 101: Pendelarm, vorn
- 102: Rohrkörper
- 108: Zwischenhülse

- 110: Werkzeugaufnahmespindel
- 111: Rotationsachse, Mittellinie, A-Achse
- 112: zentrale Bohrung
- 113: Wellenbund
- 114: Spindelrad, Stirnrad
- 115: Schulterlager
- 116: Distanzhülse
- 118: Wellenmutter
- 119: Labyrinthdichtring

- 121: Pendelarm, hinten

- 131: Rückstellflansch
- 132: Außenwandung, zylindrisch
- 133: Rückstellkugel
- 134: Federhülse
- 135: Rückstellfeder, Schraubendruckfeder Federelemente
- 136: Deckelschraube, Einstellschraube
- 137: Bohrung

- 141: Wegmesssystem, induktiv
- 142: Wegmessspule
- 143: Eisenkern
- 144: Tastelement
- 145: Schraubenfeder

- 151: Quertraverse

- 160: Werkzeug, Bündigfräser
- 161: Schaft
- 162: Auflagefläche
- 163: Walzenfräser
- 164: Lagerbolzen
- 165: Tastrolle, Anlaufring
- 166: Kugellager

## Patentansprüche

1. Fräsaggregat mit einer gegenüber einem Gehäusekörper (20) quer zu ihrer Rotationsachse (111) um eine Nulllage federzentriert pendelnden Werkzeugaufnahmespindel (110), wobei die Werkzeugaufnahmespindel (110) ein Fräswerkzeug (160) und eine Tastrolle (165) lagert, **dadurch gekennzeichnet** daβ:
- die Werkzeugaufnahmespindel (110) mit einer im Gehäusekörper (20) gelagerten Aggregatespindel (60) durch ein Zahnradgetriebe verbunden ist,
- die Mittellinie (111) der Werkzeugaufnahmespindel (110) quer zur Mittellinie (61) der Aggregatespindel (60) ausgerichtet ist,
- die Werkzeugaufnahmespindel (110) an zwei mechanisch hintereinander gekoppelten Pendelträgern (80, 100) gelagert ist,
- der erste Pendelträger (80) am Gehäusekörper (20) schwenkbar gelagert ist und
- der zweite, die Werkzeugaufnahmespindel (110) tragende Pendelträger (100) am ersten Pendelträger (80) gelagert ist.

2. Fräsaggregat gemäß Anspruch 1, **dadurch gekennzeichnet, dass** die Pendelträger (80, 100) separate Pendelachsen (71, 91) haben, die parallel zur Mittellinie (111) der Werkzeugaufnahmespindel (110) ausgerichtet sind.

3. Fräsaggregat gemäß Anspruch 1, **dadurch gekennzeichnet, dass** die beiden Pendelträger (80, 100) einen Winkel einschließen, der zwischen 75 und 90 Winkelgraden liegt.

4. Fräsaggregat gemäß Anspruch 1, **dadurch gekennzeichnet, dass** am Gehäusekörper (20) eine Ausnehmung (53) vorhanden ist, an der eine am zweiten Pendelträger (100) angeordnete Rückstellkugel (133) federbelastet anliegt.

5. Fräsaggregat gemäß Anspruch 1, **dadurch gekennzeichnet, dass** jeder Pendelträger (80, 100) zwei formsteif miteinander verbundene Pendelarme (81, 83; 101, 121) aufweist.

6. Fräsaggregat gemäß Anspruch 1, **dadurch gekennzeichnet, dass** die Mittellinie (111) der Werkzeugaufnahmespindel (110) eine auf einer zur Mittellinie (111) normalen Ebene liegende kreisförmige Fläche, deren Mittelpunkt die Nulllage darstellt, in jedem beliebigen Punkt schneiden kann.

7. Fräsaggregat gemäß Anspruch 1, **dadurch gekennzeichnet, dass** der Durchmesser der kreisförmigen Fläche zwischen 2 und 10 Millimetern liegt.

8. Fräsaggregat gemäß Anspruch 1, **dadurch gekennzeichnet, dass** die Auslenkkraft zwischen 20 und 50 N liegt.

## Claims

1. Milling unit comprising a tool receiving spindle springbiased to oscillate about a zero position in a direction transverse to its axis of rotation (111) relative to a housing body (20)v , said tool receiving spindle (110) mounting a milling/cutting tool (160) und a follower roll (165), **characterized in that**
- tool receiving spindle (110) is coupled via gear transmission means to a driven main spindle (60) mounted within housing body (20),
- centre line (111) of tool receiving spindle (110) is aligned transversely of the centre line (61) of driven main spindle (60),
- tool receiving spindle (110) is mounted on two oscillating supports (80, 100) coupled mechanically one behind the other,
- first oscillating support (80) is pivotally mounted on housing body (20) and
- second oscillating support (100), which mounts tool receiving spindle (110), is mounted on first oscillating support (80).

2. Milling unit as claimed in claim 1, **characterized in that** oscillating supports (80, 100) have separate axes of oscillation (71, 91) aligned to extend in parallel with centre line (111) of tool receiving spindle (110).

3. Milling unit as claimed in claim 1, **characterized in that** said two oscillating supports (80, 100) include an angle between 75 and 90 degrees.

4. Milling unit as claimed in claim 1, **characterized in that** housing body (20) has therein a recess (53) receiving under spring-bias a reset ball (133) engaging second oscillating support (100).

5. Milling unit as claimed in claim 1, **characterized by** the oscillating supports (80, 100) each comprising two oscillating arms (81, 83; 101, 102) coupled to maintain stiffness of shape.

6. Milling unit as claimed in claim 1, **characterized in that** centre line (111) of tool receiving spindle (110) is adapted to intersect a circular surface at any point thereof which is located in a plane normal to centre line (111), with the centre of said surface constituting said zero position.

7. Milling unit as claimed in claim 1, **characterized in that** the diameter of said circular surface is between 2 mm and 10 mm.

8. Milling unit as claimed in claim 1, **characterized in that** the force of deflection is between 20 N and 50 N.

## Revendications

1. Dispositif de fraisage équipé d'une broche porte-outils (110) centrée par un dispositif à ressorts qui oscille autour d'une position zéro, transversalement à son axe de rotation (111), par rapport à un corps de boîtier (20), la broche porte-outils (110) logeant un outil de fraisage (160) et un galet palpeur (165), **caractérisé en ce**
- **que** la broche porte-outils (110) est reliée par un engrenage à une broche (60) du dispositif de fraisage qui est logée dans le corps de boîtier (20),
- **que** la ligne médiane (111) de la broche porte-outils (110) est orientée perpendiculairement à la ligne médiane (61) de la broche du dispositif de fraisage (60),
- **que** la broche porte-outils (110) est montée sur deux supports pendulaires (80, 100) mécaniquement couplés l'un derrière l'autre,
- **que** le premier support pendulaire (80) est monté de manière pivotante sur le corps de boîtier (20) et
- **que** le deuxième support pendulaire (100) qui porte la broche porte-outils (110) est monté sur le premier support pendulaire (80).

2. Dispositif de fraisage selon la revendication 1, **caractérisé en ce que** les supports pendulaires (80, 100) ont des axes oscillants séparés (71, 91) qui sont orientés parallèlement à la ligne médiane (111) de la broche porte-outils (110).

3. Dispositif de fraisage selon la revendication 1, **caractérisé en ce que** les deux supports pendulaires (80, 100) renferment un angle entre 75 et 90 degrés.

4. Dispositif de fraisage selon la revendication 1, **caractérisé en ce que** le corps de boîtier (20) présente un creux (53) où une bille de rappel (133) placée sur le deuxième support pendulaire (100) s'applique sous l'action d'un ressort.

5. Dispositif de fraisage selon la revendication 1, **caractérisé en ce que** chaque support pendulaire (80, 100) présente deux bras pendulaires (81, 83, 101, 121) qui sont reliés l'un à l'autre de façon rigide.

6. Dispositif de fraisage selon la revendication 1, **caractérisé en ce que** la ligne médiane (111) de la broche porte-outils (110) peut passer par un point quelconque d'une surface circulaire qui se trouve sur un plan normal par rapport à la ligne médiane (111) et dont le point central présente la position zéro.

7. Dispositif de fraisage selon la revendication 1, **caractérisé en ce que** le diamètre de la surface circulaire est entre 2 et 10 millimètres.

8. Dispositif de fraisage selon la revendication 1, **caractérisé en ce que** la force de déviation est entre 20 et 50 N.
